# EUROPÄISCHE PATENTSCHRIFT

(11) **EP 2 725 059 B1**
(45) Veröffentlichungstag und Bekanntmachung des Hinweises auf die Patenterteilung: **23.03.2016**
(21) Anmeldenummer: 13180620.0
(22) Anmeldetag: 16.08.2013
(51) Int. Cl.: C08L 9/00, B60C 1/00, C08L 7/00, C08L 9/06

(54) **Kautschukmischung und Fahrzeugluftreifen**
Rubber composition and pneumatic tyre for a vehicle
Mélange de caoutchouc et pneu de véhicule

(30) Priorität: 24.10.2012 DE 102012110124; 12.02.2013 DE 102013101343
(43) Veröffentlichungstag der Anmeldung: 30.04.2014
(73) Patentinhaber: Continental Reifen Deutschland GmbH, 30165 Hannover (DE)
(72) Erfinder: Schwekendiek, Kirsten, 30171 Hannover (DE); Müller, Lena, Lauenhagen 31714 (DE); Recker, Carla, Hannover 30167 (DE)
(74) Vertreter: Finger, Karsten

(56) Entgegenhaltungen:
- EP-A1- 1 887 038
- US-A- 3 855 177

## Beschreibung

Die Erfindung betrifft eine Kautschukmischung, insbesondere für Laufstreifen von Fahrzeugluftreifen und einen Fahrzeugluftreifen.

Die Verbesserung der Fahreigenschaften von Reifen, insbesondere Fahrzeugluftreifen, ist seit jeher Ziel bei der Entwicklung neuer Kautschukzusammensetzungen. Die Fahreigenschaften der Reifen hängen dabei unter anderem stark von der Kautschukzusammensetzung des Laufstreifens ab, so dass hohe Anforderungen an die Zusammensetzung der Laufstreifen gestellt werden. Es ist bekannt, dass durch den Einsatz von auf Siliziumoxid basierenden Füllstoffen wie Kieselsäure anstelle von Ruß die Fahreigenschaften insgesamt auf ein höheres Niveau gebracht werden können. Dennoch existieren nach wie vor die bekannten Zielkonflikte zwischen den einzelnen Anforderungen, die an einen Reifen gestellt werden, wie z.B. zwischen den Eigenschaften Rollwiderstand und Nassbremsen. Eine Verbesserung des Nassgriffes führt in der Regel zur Verschlechterung des Rollwiderstandes, und je nach Mischungsauslegung der Wintereigenschaften und des Abriebverhaltens.
Es ist zudem bekannt, dass Kieselsäurepartikel aufgrund von Wechselwirkungen an der polaren Oberfläche der Partikel (Silanol-Gruppen) zur Aggregation neigen. Dies erfordert zum einen längere Mischzeiten und höhere Mischenergien um eine ausreichende Dispersion der Kieselsäure zu erzielen. Zum anderen führt eine schlechtere Dispersion der Kieselsäure zu einer erhöhten Mooney-Viskosität der Kautschukmischung, was wiederum Nachteile bei der Prozessierbarkeit, insbesondere ein schlechteres Extrusionsverhalten mit sich bringt.

Für rußhaltige Kautschukmischungen, d.h. mit Ruß als einzigem oder Haupt-Füllstoff, ist beispielsweise aus der DE 102010017805 A1 zur Verringerung der Aggregation bekannt, amphiphile Verbindungen, insbesondere PEG-Carbonsäureester, einzusetzen.

Für kieselsäurehaltige Kautschukmischungen, d.h. mit Kieselsäure als einzigem oder Haupt-Füllstoff, dienen Organosilane wie TESPD (Bis(triethoxysilylpropyl)disulfid) neben der Anbindung des Füllstoffs an das Polymer dazu, den Füllstoff zu hydrophobieren um die oben genannten Probleme zu lösen. Als Verarbeitungswirkstoffe für Kieselsäure sind des Weiteren hydrophobierende Agenzien bekannt, wie z.B. Ammoniumsalze aus z.B. der EP 1081187 A2, Acrylate und Methacrylate aus z.B. der US 2010298488 A1 und Polyethylenglycol (PEG) aus z.B. der EP 1571009 A1. Diese Wirkstoffe haben zum Teil den Nachteil, dass sie die Heizkinetik von Kautschukmischungen negativ beeinflussen.

Aus der EP 1887038 A1 ist die Verwendung von Polyoxyalkylen-Aminen in Kombination mit epoxidiertem Sojabohnenöl und einem verringerten Gehalt an Silan zur verbesserten Dispersion von Kieselsäure in einer Kautschukmischung bekannt.
Die US 20100048775 A1 offenbart eine Kautschukmischung mit reduziertem DPG (Diphenylguanidin)-Gehalt in Kombination mit der Verwendung eines tertiären Amins zur verbesserten Dispersion von Kieselsäure.
Der Einfluss auf das Abriebverhalten geht aus diesen beiden Schriften nicht hervor.

Der vorliegenden Erfindung liegt nun die Aufgabe zugrunde, eine Kautschukmischung, insbesondere für Laufstreifen von Fahrzeugluftreifen bereitzustellen, die eine Verbesserung des Performance-Niveaus hinsichtlich des Abriebverhaltens und des Zielkonfliktes Rollwiderstand versus Nassgriff bei gleichbleibenden sonstigen Reifeneigenschaften ermöglicht.
Gleichzeitig soll die Kautschukmischung eine gute Prozessierbarkeit aufweisen und eine verringerte Ausvulkanisationszeit t₉₀ zeigen, die eine ökonomisch sinnvolle und kostengünstige Produktion von daraus hergestellten Fahrzeugluftreifen ermöglicht.

Gelöst wird die Aufgabe erfindungsgemäß dadurch, dass die Kautschukmischung
- wenigstens einen Dienkautschuk und
- 0,1 bis 20 phr wenigstens eines Polyetheramins und
- 5 bis 250 phr wenigstens einer Kieselsäure
enthält, wobei das Polyetheramin aus Propylenoxid hergestellt ist und/oder von Propylenoxid abgeleitet ist.

Die in dieser Schrift verwendete Angabe phr (Parts per hundred Parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Überraschenderweise ist es durch die Kombination von wenigstens einem Polyetheramin aus Propylenoxid in der beanspruchten Menge und Kieselsäure in der erfindungsgemäßen Kautschukmischung gelungen, dass die Kautschukmischung auf einem verbesserten Performance-Niveau hinsichtlich des Abriebverhaltens sowie des Zielkonfliktes Rollwiderstand versus Nassgriff liegt, wobei die sonstigen physikalischen Eigenschaften auf einem guten Niveau liegen. In der Regel trägt eine verringerte Aggregat-Bildung der Kieselsäure, also eine verbesserte Dispersion der Kieselsäure, zu der Verbesserung der physikalischen Eigenschaften einer Kautschukmischung bei. Gleichzeitig weist die Kautschukmischung eine verringerte Mooney-Viskosität auf, was eine verringerte Mischenergie und damit eine verbesserte Prozessierbarkeit mit sich bringt.
Des Weiteren zeigt sich überraschenderweise, dass die erfindungsgemäße Kautschukmischung eine verringerte Heizzeit t₉₀ aufweist, was eine ökonomisch sinnvolle Verarbeitung der erfindungsgemäßen Kautschukmischung ermöglicht und mit einer Kostenersparnis einhergeht und/oder das Überheizen anderer Reifenbauteile vermeidet.

Die erfindungsgemäße Kautschukmischung enthält zumindest einen Dienkautschuk. Die Dienkautschuke können im Verschnitt eingesetzt werden. Zu den Dienkautschuken zählen alle Kautschuke mit einer ungesättigten Kohlenstoffkette, die sich zumindest teilweise von konjugierten Dienen ableiten.
Einsetzbare Dienkautschuke sind beispielsweise natürliches Polyisopren (NR), synthetisches Polyisopren (IR), Polybutadien (BR), Styrol-Butadien-Kautschuk (SBR), Styrol-Isopren-Butadien-Terpolymer, Butylkautschuk, Halobutylkautschuk, Ethylen-Propylen-Dien-Kautschuk (EPDM) oder modifizierte Dienkautschuke. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen handeln. Es kommen aber auch weitere, der fachkundigen Person bekannte, Modifizierungen, auch als Funktionalisierungen bezeichnet, in Frage. Bestandteil solcher Funktionalisierungen können auch Metallatome sein.

Bevorzugt ist der Dienkautschuk ausgewählt aus der Gruppe bestehend aus natürlichem und/oder synthetischem Polyisopren und/oder Polybutadien und/oder Styrol-Butadien-Kautschuk.

Natürliches und/oder synthetisches Polyisopren werden in Mengen von 0 bis 100 phr, bevorzugt 0,1 bis 90 phr, besonders bevorzugt wenigstens 5 phr eingesetzt.

Bei dem Styrol-Butadien-Copolymer kann es sich um lösungspolymerisiertes Styrol-Butadien-Copolymer (S-SBR) mit einem Styrolgehalt, bezogen auf das Polymer, von 5 bis 45 Gew.-% und einem Vinylgehalt (Gehalt an 1,2-gebundenem Butadien, bezogen auf das gesamte Polymer) von 5 bis 70 Gew.-% handeln, welches zum Beispiel unter Verwendung von Lithiumalkylen in organischem Lösungsmittel hergestellt werden kann. Die S-SBR können auch gekoppelt und/oder endgruppenmodifiziert und/oder entlang der Kohlenstoffkette modifiziert (engl. backbone modified) sein. Bei der Modifizierung kann es sich um die oben beschriebenen Gruppen und Funktionalisierungen handeln.
Es können aber auch emulsionspolymerisiertes Styrol-Butadien-Copolymer (E-SBR) sowie Mischungen aus E-SBR und S-SBR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Bevorzugt enthält die Kautschukmischung SSBR in Mengen von 0 bis 90 phr, bevorzugt 10 bis 90 phr, besonders bevorzugt 50 bis 100 phr, ganz besonders bevorzugt 70 bis 90 phr.

Bei dem Polybutadien (=Butadienkautschuk, BR) kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadienkautschuk) mit einem cis-Anteil von 20 bis 50 Gew.-%. Ein high-cis-Polybutadien ist z.B. Nd-BR (Neodym-katalysierter Butadienkautschuk). Mit Nd-BR werden besonders gute Eigenschaften der Kautschukmischung hinsichtlich der Abriebeigenschaften.
Das eingesetzte Polybutadien kann endgruppenmodifiziert sein. Bei der Modifizierung kann es sich um die oben beschriebenen Gruppen und Funktionalisierungen handeln.

Die Kautschukmischung enthält bevorzugt Polybutadien in Mengen von 0 bis 100 phr, bevorzugt 0 bis 70 phr, besonders bevorzugt 0 bis 50 phr, wenigstens aber 0,1 phr und ganz besonders bevorzugt 5 bis 50 phr und wiederum ganz besonders bevorzugt 5 bis 25 phr.

Gemäß einer vorteilhaften Weiterbildung werden natürliches und/oder synthetisches Polyisopren und/oder Polybutadien und/oder Styrol-Butadien-Kautschuk im Verschnitt eingesetzt.
In einer besonders bevorzugten Ausführungsform enthält die Kautschukmischung 10 bis 100 phr eines natürlichen und/oder synthetischen Polyisoprens, 0 bis 50 phr eines Polybutadien-Kautschuks sowie 0 bis 90 phr eines Styrol-Butadien-Kautschuks. Eine derartige Kautschukmischung zeigt ein gut ausbalanciertes Performance-Niveau im Hinblick auf die physikalischen Eigenschaften, wie insbesondere die Reiß-, Abrieb- und Rollwiderstandseigenschaften.
Erfindungsgemäß enthält die Kautschukmischung wenigstens ein Polyetheramin auf Basis von Propylenoxid. Dabei wird das Polyetheramin aus Propylenoxid hergestellt und anschließend werden die terminalen Hydroxylgruppen in einer Aminierungs-Reaktion durch Aminogruppen substituiert. Das Polyetheramin ist somit von Propylenoxid abgeleitet. Damit ist das Polyetheramin ein Diamin eines Polyalkylenglycols. Derartige Pölyetheramine sind u.a. auch unter der Bezeichnung Jeffamine® als Produkt der Firma Huntsman erhältlich.

Erfindungsgemäß ist das Polyetheramin aus Propylenoxid hergestellt und/oder von Propylenoxid abgeleitet.
Die allgemeine Summenformel lautet bevorzugt:

R₁R₂N(CH(CH₃)CH₂O)ₓCH₂CH(CH₃)NR₁R₂

mit R₁ = Wasserstoffatom und R₂ = Wasserstoffatom oder verzweigter und/oder unverzweigter Kohlenwasserstoffrest mit 1 bis 10, bevorzugt 2 bis 5 Kohlenstoffatomen und x größer oder gleich 1 und kleiner oder gleich 7.
Es ist im Rahmen der vorliegenden Erfindung denkbar, dass ein Gemisch von Polyetheraminen mit unterschiedlichen terminalen Gruppen R₂ vorliegt.

Es kann sich aber auch um ein Polyetheramin handeln, das aus Ethylenoxid und Propylenoxid hergestellt ist. Hierbei sind (CH₂CH₂O)_{y}- und (CH(CH₃)CH₂O)₂-Einheiten mit z = 0 bis 7 und y = 0 bis 7 statistisch verteilt und/oder in geordneten Sequenzen im Molekül vorhanden, wobei alle möglichen Ordnungen für die Sequenzen denkbar sind. Hiermit werden besonders gute Rollwiderstand-, Nassgriff- und Abriebeigenschaften erzielt.

Gemäß einer vorteilhaften Weiterbildung der Erfindung ist das Polyetheramin ein Polypropylenglycol mit Aminogruppen an beiden Molekülenden, also R₂ = Wasserstoffatom, womit es sich um ein Diamin mit primären Aminogruppen handelt.
Die Summenformel dafür lautet:

H₂N(CH(CH₃)CH₂O)ₓCH₂CH(CH₃)NH₂.

Hierbei ist x größer oder gleich 1 und kleiner oder gleich 7. Ein solches Polyetheramin ist beispielsweise unter dem Handelsnamen Jeffamine® D-230 von der Firma Huntsman erhältlich.
Es kann sich aber auch um ein Polyetheramin handeln, das aus Ethylenoxid und Propylenoxid hergestellt ist. Hierbei sind (CH₂CH₂O)_{y}- und (CH(CH₃)CH₂O)ₓ-Einheiten mit x = 0 bis 7 und y = 0 bis 7 statistisch verteilt und/oder in geordneten Sequenzen im Molekül vorhanden, wobei alle möglichen Ordnungen für die Sequenzen denkbar sind.

Gemäß einer weiteren vorteilhaften Weiterbildung der Erfindung handelt es sich bei dem Polyetheramin um ein sekundäres Polyetheramin, welches wenigstens aus Propylenoxid hergestellt ist, durch Aminierung in ein Diamin umgewandelt ist und bei dem jeweils ein Wasserstoffatom der beiden terminalen Aminogruppen durch Reaktion mit einem Keton durch einen verzweigten Kohlenwasserstoffrest ersetzt ist und/oder durch Reaktion mit einem Aldehyd durch einen unverzweigten Kohlenwasserstoffrest substituiert ist. Damit liegt dann die terminale Gruppe NHR₂ vor, wobei R₂ in diesem Fall ein Kohlenwasserstoffrest mit 1 bis 10 Kohlenstoffatomen ist. Eine derartige Endgruppenmodifizierung ist u.a. in dem Produktdatenblatt "The JEFFAMINE^{®} Polyetheramines" der Firma Huntsman, Copyright © 2007 Huntsman Corporation, beschrieben. Der verzweigte und/oder unverzweigte Kohlenwasserstoffrest R₂ kann dabei gesättigt oder ungesättigt sein. Hieraus ergibt sich die Zahl der Wasserstoffatome dieses Kohlenwasserstoffrestes. Bevorzugt handelt es sich bei dem verzweigten und/oder unverzweigten Kohlenwasserstoffrest um einen gesättigten Kohlenwasserstoffrest.
Bevorzugt handelt es sich bei R₂ um Kohlenwasserstoffreste mit 2 bis 5 Kohlenstoffatomen, die zu den terminalen Gruppen, also z.B. NHCH(CH₃)₂-Gruppen, führen.
In einer bevorzugten Ausführungsform handelt es sich dabei um die Gruppierung -CH(CH₃)₂, die auch als Isopropyl-Gruppe bezeichnet wird.
In einer weiteren bevorzugten Ausführungsform handelt es sich dabei um die Gruppierungen -CH(CH₃)CH₂CH₃ (= *sec*-Butyl) und/oder CH₂-CH(CH₃)₂ (= Isobutyl) und/oder -CH₂-CH₂-CH₂-CH₃ (= Butyl).

In einer dritten bevorzugten Ausführungsform handelt es sich dabei um die Gruppierungen -CH(CH₃)CH₂CH₂CH₃ (= 1-Methylbutyl) und/oder -CH(CH₂CH₃)₂ (= 1-Ethylpropyl) und/oder CH₂-CH(CH₃)-C₂H₅ (= 2-Methylbutyl) und/oder -CH(CH₃)-CH(CH₃)₂ (= 1,2-Dimethylpropyl) und/oder -CH₂-C(CH₃)₃ (= 2,2-Dimethylpropyl) und/oder -CH₂-CH₂-CH(CH₃)₂ (= Isopentyl) und/oder -(CH₂)₄-CH₃ (= Pentyl).

In weiteren bevorzugten Ausführungsformen der Erfindung handelt es sich um eine Alkylgruppe, die ausgewählt ist aus der Gruppe bestehend aus Ethyl- und/oder Propyl- und/oder Isopropyl- und/oder Butyl- und/oder Isobutyl- und/oder *sec*-Butyl und/oder eine Pentyl- und/oder Isopentyl- und/oder 1-Methylbutyl- und/oder -Ethylpropyl- und/oder 2-Methylbutyl- und/oder 1,2-Dimethylpropyl- und/oder 2,2-Dimethylpropyl-Gruppe, wobei auch Polyetheramine im Gemisch mit unterschiedlichen, also 2 oder mehr dieser Gruppen vorliegen können.

Erfindungsgemäß ist das Polyetheramin aus Propylenoxid hergestellt. Damit hat ein bevorzugtes Endgruppenmodifiziertes Polyetheramin z.B. mit R₂ = Isopropyl die folgende Summenformel:

CH(CH₃)₂NH(CH(CH₃)CH₂O)ₓCH₂CH(CH₃)NHCH(CH₃)₂.

Hierbei ist x größer oder gleich 1 und kleiner oder gleich 7. Ein solches Polyetheramin ist beispielsweise unter dem Handelsnamen Jeffamine® SD-231 von der Firma Huntsman erhältlich.
Es kann sich aber auch um ein Polyetheramin handeln, das aus Ethylenoxid und Propylenoxid hergestellt ist. Hierbei sind (CH₂CH₂O)_{y}- und (CH(CH₃)CH₂O)ₓ-Einheiten mit x = 0 bis 7 und y = 0 bis 7 statistisch verteilt und/oder in geordneten Sequenzen im Molekül vorhanden, wobei alle möglichen Ordnungen für die Sequenzen denkbar sind.

Es ist im Rahmen der vorliegenden Erfindung auch denkbar, dass das Polyetheramin aus Ethylenoxid und Propylenoxid hergestellt ist und als terminalen Gruppen NH₂- und/oder wie oben beschrieben NHR₂-Gruppen aufweist.

Das Polyetheramin weist bevorzugt ein Molekulargewicht M_{w} zwischen 100 und 800 g/mol auf, besonders bevorzugt zwischen 130 und 650 g/mol, und ganz besonders bevorzugt zwischen 190 und 400 g/mol.

Erfindungsgemäß enthält die Kautschukmischung 0,1 bis 20 phr wenigstens eines Polyetheramins, bevorzugt 0,5 bis 15 phr, besonders bevorzugt 1,5 bis 11 phr.

Erfindungsgemäß enthält die Kautschukmischung wenigstens eine Kieselsäure. Bei der Kieselsäure kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 350 m²/g, bevorzugt von 35 bis 260 m²/g, besonders bevorzugt von 100 bis 260 m²/g und ganz besonders bevorzugt von 130 bis 235 m²/g und eine CTAB-Oberfläche (gemäß ASTM D 3765) von 30 bis 350 m²/g, bevorzugt von 30 bis 250 m²/g, besonders bevorzugt von 100 bis 250 m²/g und ganz besonders bevorzugt von 125 bis 230 m²/g aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil® VN3 (Handelsname) der Firma Evonik als auch hoch dispergierbare Kieselsäuren, so genannte HD-Kieselsäuren (z.B. Zeosil® 1165 MP der Firma Rhodia), zum Einsatz kommen.

Die Menge der eingesetzten Kieselsäure beträgt 5 bis 250 phr, bevorzugt 20 bis 180 phr, besonders bevorzugt 20 bis 140 phr und ganz besonders bevorzugt 40 bis 110 phr. Besonders mit einer Menge von 40 bis 110 phr werden sehr gute Vulkanisateigenschaften, insbesondere sehr gute Abriebeigenschaften, der Kautschukmischung erzielt.

Die Kautschukmischung kann außerdem noch andere polare Füllstoffe, wie beispielsweise Alumosilicate, Kreide, Stärke, Magnesiumoxid, Titandioxid oder Kautschukgele enthalten. Zur Verbesserung der Verarbeitbarkeit und zur Anbindung der Kieselsäure und anderer ggf. vorhandener polarer Füllstoffe an den Dienkautschuk können Silan-Kupplungsagenzien in Kautschukmischungen eingesetzt werden. Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2 bis 8).
So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß
(Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Die Silan-Kupplungsagenzien werden in Mengen von 0,2 bis 30 phf, bevorzugt 1 bis 15 phf, da dann eine optimale Anbindung des Füllstoffes an den oder die Kautschuke erfolgen kann. Die Einheit phf (parts per hundred parts of filler by weight) bezieht sich hierbei jeweils auf 100 Gewichtsteile Kieselsäure.

Die Kautschukmischung kann außerdem zusätzlich als Füllstoff Ruß enthalten. Die verwendbaren Ruße weisen bevorzugt folgende Charakteristika auf: DBP-Zahl (gemäß ASTM D 2414) 90 bis 200 mL/100 g, CTAB-Zahl (gemäß ASTM D 3765) 80 bis 170 m²/g und Jodadsorptionszahl (gemäß ASTM D 1510) 10 bis 250 g/kg.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure),
c) Wachse,
d) Harze und
e) Mastikationshilfsmittel, wie z. B. 2,2'-Dibenzamidodiphenyldisulfid (DBD).

Die Kautschukmischung kann außerdem Weichmacher enthalten. Hierzu gehören alle dem Fachmann bekannten Weichmacher wie aromatische, naphthenische oder paraffinische Mineralölweichmacher, wie z.B. MES (mild extraction solvate) oder TDAE (treated distillate aromatic extract), oder Rubber-to-Liquid-Öle (RTL) oder Biomass-to-Liquid-Öle (BTL) oder Faktisse oder Weichmacherharze oder Flüssig-Polymere (wie Flüssig-BR), deren mittleres Molekulargewicht (Bestimmung per GPC = gel permeation chromatography, in Anlehnung an BS ISO 11344:2004) zwischen 500 und 25000 g/mol liegt. Werden in der erfindungsgemäßen Kautschukmischung Flüssig-Polymere als Weichmacher eingesetzt, so gehen diese nicht als Kautschuk in die Berechnung der Zusammensetzung der Polymermatrix ein.
Bevorzugt handelt es sich bei dem Weichmacher um TDAE. Es ist im Rahmen dieser Erfindung auch denkbar, dass ein Gemisch der genannten Weichmacher eingesetzt wird.

Die Menge an diesen Weichmachern beträgt 0 bis 70 phr, bevorzugt 0 bis 60 phr, wenigstens aber 0,1 phr.
Sehr gute Ergebnisse hinsichtlich des Abriebverhaltens sowie der sonstigen Mischungseigenschaften zeigen sich, wenn die Kautschukmischung 20 bis 40 phr Weichmacher enthält.

Die Vulkanisation wird in Anwesenheit von Schwefel oder Schwefelspendern mit Hilfe von Vulkanisationsbeschleunigern durchgeführt, wobei einige
Vulkanisationsbeschleuniger zugleich als Schwefelspender wirken können. Schwefel oder Schwefelspender sowie ein oder mehrere Beschleuniger werden im letzten Mischungsschritt in den genannten Mengen der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS). Gemäß einer vorteilhaften Weiterbildung der Erfindung werden mehrere Beschleuniger eingesetzt. Bevorzugt wird ein Sulfenamidbeschleuniger, besonders bevorzugt CBS, in Kombination mit dem Guanidin-Beschleuniger DPG (Diphenylguanidin) eingesetzt. Die Menge an DPG beträgt dabei 0 bis 5 phr, bevorzugt 0,1 bis 3 phr, besonders bevorzugt 0,5 bis 2,5 phr, ganz besonders bevorzugt 1 bis 2,5 phr.

Gemäß einer vorteilhaften Ausführungsform der Erfindung ist die Kautschukmischung frei von DPG, d.h. sie enthält 0 bis 0,2 phr DPG, bevorzugt 0 phr DPG. Im Stand der Technik bekannte Kautschukmischungen enthalten üblicherweise DPG. Da dies eine Chemikalie ist, die ein gesundheits- und umweltgefährdendes Potential besitzt, ist man bestrebt, DPG in möglichst geringen Mengen einzusetzen. Es ist jedoch bekannt, dass ein Verzicht von DPG oder vergleichbarer Agenzien in schwefelvernetzbaren Kautschukmischungen normalerweise zu einer Verschlechterung der physikalischen Eigenschaften und der Prozessierbarkeit führt.

In der erfindungsgemäßen Kautschukmischung ist es möglich, auf den potentiell gefährlichen Bestandteil DPG ganz zu verzichten und zusätzlich eine Verbesserung der physikalischen Eigenschaften, insbesondere im Hinblick auf das Performance-Niveau der Eigenschaften Abriebverhalten sowie Rollwiderstand versus Nassgriff, zu erzielen. Die Ausvulkanisationszeit t₉₀ bleibt auf einem gleichen und/oder sogar leicht verbesserten Niveau.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049261 A2 beschrieben sind, können in der Kautschukmischung eingesetzt werden.
Außerdem können in der Kautschukmischung Vulkanisationsverzögerer vorhanden sein.

Der Erfindung liegt weiterhin die Aufgabe zugrunde einen Fahrzeugluftreifen bereitzustellen, der in wenigstens einem Bauteil die erfindungsgemäße Kautschukmischung enthält. Bevorzugt handelt es sich bei dem Bauteil um einen Laufstreifen, vorzugsweise eines PKW-Reifens. Die Kautschukmischung kann aber auch in der Seitenwand und/oder in den inneren Bauteilen eines Fahrzeugluftreifens, den sogenannten Body-Bauteilen, zum Einsatz kommen.

Eine weitere Aufgabe der vorliegenden Erfindung besteht darin, die physikalischen Eigenschaften von technischen Kautschukartikeln zu verbessern. Gelöst wird die Aufgabe dadurch, dass die oben beschriebenen Kautschukmischungen in technischen Kautschukartikeln verwendet werden. Die Kautschukmischung ist z.B. zur Verwendung in technischen Kautschukartikeln wie z.B. Transportbändern, Riemen, Gurten, Schläuchen, Drucktüchern, Luftfedern oder Dämpfungselementen geeignet.

Eine weitere Aufgabe der Erfindung besteht darin, die Abriebeigenschaften, die Prozessierbarkeit und die Rollwiderstand-/Nassgriffeigenschaften von Fahrzeugluftreifen zu verbessern. Gelöst wird diese Aufgabe durch die Verwendung der oben beschriebenen Kautschukmischungen in Fahrzeugluftreifen.

Die Herstellung der erfindungsgemäßen Kautschukmischung erfolgt auf herkömmliche Art und Weise, wobei zunächst in der Regel eine Grundmischung, die sämtliche Bestandteile mit Ausnahme des Vulkanisationssystems (Schwefel, Schwefelspender und vulkanisationsbeeinflussende Stoffe) enthält, in ein oder mehreren Mischstufen hergestellt wird und im Anschluss durch Zugabe des Vulkanisationssystems die Fertigmischung erzeugt wird. Anschließend wird die Mischung weiterverarbeitet, z. B. durch einen Extrusionsvorgang, und in die entsprechende Form gebracht. Bevorzugt wird die Mischung in die Form eines Laufstreifens gebracht. Ein so erzeugter Laufstreifenmischungsrohling wird bei der Herstellung des Reifenrohlings, insbesondere Fahrzeugluftreifenrohlings, wie bekannt, aufgelegt. Der Laufstreifen kann aber auch auf einen Reifenrohling, der bereits alle Reifenteile bis auf den Laufstreifen enthält, in Form eines schmalen Kautschukmischungsstreifens aufgewickelt werden.

Die Erfindung soll nun anhand von Vergleichs- und Ausführungsbeispielen, die in den Tabellen 1 bis 3 zusammengefasst sind, näher erläutert werden.
Die Vergleichsmischung ist mit V, die erfindungsgemäßen Mischungen sind mit E gekennzeichnet.

Die Mischungsherstellung erfolgte unter üblichen Bedingungen in drei Stufen in einem Labortangentialmischer. Es wurden die Umsatzzeiten bis zum Erreichen der relativen Vernetzungsgrade von 10 und 90 % (t₁₀, t₉₀) über ein rotorloses Vulkameter (MDR = Moving Disc Rheometer) gemäß DIN 53 529 ermittelt. Aus sämtlichen Mischungen wurden Prüfkörper durch optimale Vulkanisation unter Druck bei 160 °C hergestellt und mit diesen Prüfkörpern für die Kautschukindustrie typische Materialeigenschaften mit den im Folgenden angegebenen Testverfahren ermittelt.
- Mooney-Viskosität gemäß ASTM D1646
- Umsatzzeiten von 10% Umsatz (t₁₀ Anvulkanisationszeit) und 90% Umsatz (t₉₀, Ausvulkanisationszeit) mittels rotorlosem Vulkameter (MDR = Moving Disc Rheometer) gemäß DIN 53 529
- Shore A Härte bei Raumtemperatur und 70 °C gemäß DIN ISO 7619-1
- Rückprallelastizitäten bei Raumtemperatur (RT) und 70 °C gemäß DIN 53 512
- Zugfestigkeit, Reißdehnung und Spannungswert bei 300% statischer Dehnung (Modul 300 %) bei Raumtemperatur gemäß DIN 53 504
- Abrieb bei Raumtemperatur gemäß DIN/ISO 4649

**Tabelle 1**

| **Bestandteile** | **Einheit** | **V1** | **E1** | **E2** | **E3** |
|---|---|---|---|---|---|
| NR TSR | phr | 10 | 10 | 10 | 10 |
| ND-BR ^{a)} | phr | 18 | 18 | 18 | 18 |
| S-SBR ^{b)} | phr | 72 | 72 | 72 | 72 |
| Kieselsäure ^{c)} | phr | 95 | 95 | 95 | 95 |
| Weichmacher TDAE | phr | 35 | 35 | 35 | 35 |
| Silan ^{d)} | phf | 7,2 | 7,2 | 7,2 | 7,2 |
| Polyetheramin ^{e)} | phr | 0 | 2 | 5 | 10 |
| Alterungsschutzmittel | phr | 4 | 4 | 4 | 4 |
| Stearinsäure | phr | 2,5 | 2,5 | 2,5 | 2,5 |
| Zinkoxid | phr | 2,5 | 2,5 | 2,5 | 2,5 |
| Beschleuniger DPG | phr | 2 | 2 | 2 | 2 |
| Beschleuniger CBS | phr | 2 | 2 | 2 | 2 |
| Schwefel | phr | 2 | 2 | 2 | 2 |

| **Eigenschaften** | | | | | |
|---|---|---|---|---|---|
| Mooney-Viskosität ML (1+4) b. 100 °C | Mooney-Einh. | 63 | 55 | 48 | 40 |
| Anvulkanisationszeit t₁₀ | min | 3,0 | 2,4 | 1,1 | 0,7 |
| Ausvulkanisationszeit t₉₀ | min | 17 | 11 | 11 | 10 |
| Shore A Härte bei RT | Shore A | 67 | 68 | 71 | 71 |
| Rückprallelast. bei RT | % | 26 | 27 | 26 | 24 |
| Rückprallelast. bei 70 °C | % | 48 | 51 | 49 | 45 |
| Differenz (Rückprallelast. 70 °C - RT) | | 22 | 24 | 23 | 21 |
| Zugfestigkeit bei RT | MPa | 15 | 16 | 14 | 17 |
| Reißdehnung bei RT | % | 473 | 451 | 432 | 592 |
| Modul 300 % | MPa | 9 | 10 | 10 | 8 |
| Abrieb | mm³ | 143 | 152 | 135 | 115 |

| | | | | | |
|---|---|---|---|---|---|
| ^{a)} BR: High cis BR, Buna® CB 25, Fa. Lanxess ^{b)} SSBR: NS 116, Fa. Nippon Zeon ^{c)} Kieselsäure: Ultrasil® VN 3, Fa. Evonik ^{d)} Silan: Si 261®, Fa. Evonik ^{c)} Polyetheramin: Jeffamin® D-230, Fa. Huntsman | | | | | |

Aus Tabelle 1 ist ersichtlich, dass die erfindungsgemäßen Kautschukmischungen E2 und E3 überraschenderweise ein verbessertes Abriebverhalten als die Vergleichsmischung V1 aufweisen. Gleichzeitig weisen die erfindungsgemäßen Kautschukmischungen E1, E2 und E3 eine verringerte Mooney-Viskosität und verringerte Ausvulkanisationszeiten t₉₀ auf, was eine verbesserte Prozessierbarkeit der Kautschukmischung bzw. ein ökologisch sinnvolles Heizen der Produkte daraus, insbesondere von Fahrzeugluftreifen, ermöglicht. Außerdem zeigen die erfindungsgemäßen Kautschukmischungen E1 und E2 eine Verbesserung hinsichtlich des Zielkonfliktes Rollwiderstand versus Nassgriff, was sich anhand der erhöhten Differenz der Rückprallelastizitäten zeigt.

**Tabelle 2**

| **Bestandteile** | **Einheit** | **V1** | **E4** | **E5** | **E6** |
|---|---|---|---|---|---|
| NR TSR | phr | 10 | 10 | 10 | 10 |
| Nd-BR ^{a)} | phr | 18 | 18 | 18 | 18 |
| S-SBR ^{b)} | phr | 72 | 72 | 72 | 72 |
| Kieselsäure ^{c)} | phr | 95 | 95 | 95 | 95 |
| Weichmacher TDAE | phr | 35 | 35 | 35 | 35 |
| Silan ^{d)} | phf | 7,2 | 7,2 | 7,2 | 7,2 |
| Polyetheramin ^{e)} | phr | 0 | 2 | 5 | 10 |
| Alterungsschutzmittel | phr | 4 | 4 | 4 | 4 |
| Stearinsäure | phr | 2,5 | 2,5 | 2,5 | 2,5 |
| Zinkoxid | phr | 2,5 | 2,5 | 2,5 | 2,5 |
| Beschleuniger DPG | phr | 2 | 2 | 2 | 2 |
| Beschleuniger CBS | phr | 2 | 2 | 2 | 2 |
| Schwefel | phr | 2 | 2 | 2 | 2 |

| **Eigenschaften** | | | | | |
|---|---|---|---|---|---|
| Mooney-Viskosität ML (1+4) b. 100 °C | Mooney-Einh. | 63 | 54 | 47 | 37 |
| Anvulkanisationszeit t₁₀ | min | 3,0 | 3,0 | 2,3 | 1,4 |
| Ausvulkanisationszeit t₉₀ | min | 17 | 12 | 11 | 11 |
| Shore A Härte bei RT | Shore A | 67 | 68 | 68 | 67 |
| Rückprallelast. bei RT | % | 26 | 26 | 27 | 29 |
| Rückprallelast. bei 70 °C | % | 48 | 50 | 51 | 51 |
| Differenz (Rückprallelast. 70 °C - RT) | | 22 | 24 | 24 | 22 |
| Zugfestigkeit bei RT | MPa | 15 | 15 | 15 | 14 |
| Reißdehnung bei RT | % | 473 | 483 | 464 | 451 |
| Modul 300 % | MPa | 9 | 9 | 10 | 9 |
| Abrieb | mm³ | 143 | 139 | 135 | 138 |

| | | | | | |
|---|---|---|---|---|---|
| ^{a)} BR: High cis BR, Buna® CB 25, Fa. Lanxess ^{b)} SSBR: NS 116, Fa. Nippon Zeon ^{c)} Kieselsäure: Ultrasil® VN 3, Fa. Evonik ^{d)} Silan: Si 261®, Fa. Evonik ^{e)} Polyetheramin: Jeffamin® SD-231, Fa. Huntsman | | | | | |

Aus Tabelle 2 ist ersichtlich, dass die erfindungsgemäßen Kautschukmischungen E4, E5 und E6 überraschenderweise ein verbessertes Abriebverhalten als die Vergleichsmischung V1 aufweisen. Gleichzeitig weisen die erfindungsgemäßen Kautschukmischungen eine verringerte Mooney-Viskosität und verringerte Ausvulkanisationszeiten t₉₀ auf, was eine verbesserte Prozessierbarkeit der Kautschukmischung bzw. ein ökologisch sinnvolles Heizen der Produkte daraus, insbesondere von Fahrzeugluftreifen, ermöglicht. Außerdem zeigen die erfindungsgemäßen Kautschukmischungen E4 und E5 eine Verbesserung hinsichtlich des Zielkonfliktes Rollwiderstand versus Nassgriff, was sich anhand der erhöhten Differenz der Rückprallelastizitäten zeigt.

**Tabelle 3**

| **Bestandteile** | **Einheit** | **V2** | **V3** | **V4** | **E7** | **E8** | **E9** | **E10** |
|---|---|---|---|---|---|---|---|---|
| NR TSR | phr | 10 | 10 | 10 | 10 | 10 | 10 | 10 |
| Nd-BR ^{a)} | phr | 18 | 18 | 18 | 18 | 18 | 18 | 18 |
| S-SBR ^{b)} | phr | 72 | 72 | 72 | 72 | 72 | 72 | 72 |
| Kieselsäure ^{c)} | phr | 95 | 95 | 95 | 95 | 95 | 95 | 95 |
| Weichmacher TDAE | phr | 30 | 30 | 30 | 30 | 30 | 30 | 30 |
| Silan ^{d)} | phf | 7,2 | 7,2 | 7,2 | 7,2 | 7,2 | 7,2 | 7,2 |
| Polyetheramin ^{e)} | phr | 0 | 0 | 0 | 2,2 | 2,2 | 0 | 0 |
| Polyetheramin ^{f)} | phr | 0 | 0 | 0 | 0 | 0 | 3,0 | 3,0 |
| Alterungsschutzmittel | phr | 4 | 4 | 4 | 4 | 4 | 4 | 4 |
| Stearinsäure | phr | 2,5 | 2,5 | 2,5 | 2,5 | 2,5 | 2,5 | 2,5 |
| Zinkoxid | phr | 2,5 | 2,5 | 2,5 | 2,5 | 2,5 | 2,5 | 2,5 |
| Beschleuniger DPG | phr | 2,0 | 1,0 | 0,0 | 1,0 | 0,0 | 1,0 | 0,0 |
| Beschleuniger CBS | phr | 2 | 2 | 2 | 2 | 2 | 2 | 2 |
| Schwefel | phr | 2 | 2 | 2 | 2 | 2 | 2 | 2 |

| **Eigenschaften** | | | | | | | | |
|---|---|---|---|---|---|---|---|---|
| Anvulkanisationszeit t₁₀ | min | 2,7 | 1,8 | 1,4 | 1,7 | 1,1 | 1,3 | 1,4 |
| Ausvulkanisationszeit t₉₀ | min | 15 | 19 | 21 | 12 | 16 | 13 | 15 |
| Shore A Härte bei RT | Shore A | 68 | 64 | 61 | 69 | 69 | 67 | 68 |
| Rückprallelast. bei RT | % | 23 | 23 | 23 | 24 | 24 | 24 | 24 |
| Rückprallelast. bei 70 °C | % | 46 | 43 | 40 | 47 | 46 | 49 | 48 |
| Differenz (Rückprallelast. 70 °C - RT) | | 23 | 20 | 17 | 23 | 22 | 25 | 24 |
| Zugfestigkeit bei RT | MPa | 15 | 15 | 13 | 15 | 15 | 15 | 15 |
| Reißdehnung bei RT | % | 417 | 470 | 530 | 412 | 431 | 410 | 401 |
| Modul 300 % | MPa | 11 | 9 | 7 | 11 | 11 | 11 | 11 |
| Abrieb | mm³ | 154 | 149 | 182 | 159 | 150 | 152 | 150 |

| | | | | | | | | |
|---|---|---|---|---|---|---|---|---|
| ^{a)} BR: High cis BR, Buna® CB 25, Fa. Lanxess ^{b)} SSBR: NS 116, Fa. Nippon Zeon ^{c)} Kieselsäure: Ultrasil® VN 3, Fa. Evonik ^{d)} Silan: Si 261®, Fa. Evonik ^{e)} Polyetheramin: Jeffamin® D-230, Fa. Huntsman ^{f)} Polyetheramin: Jeffamin® SD-231, Fa. Huntsman | | | | | | | | |

Aus Tabelle 3 ist ersichtlich, dass die erfindungsgemäßen Kautschukmischungen E7 und E9 sowie E8 und E10, die eine verringerte Menge (1 phr) DPG aufweisen bzw. frei von DPG (0 phr) sind, eine Verbesserung hinsichtlich des Niveaus der physikalischen Eigenschaften Abriebverhalten und der Rückprallelastizitäten als Indikatoren für den Zielkonflikt Rollwiderstand vs. Nassgriff sowie der Ausvulkanisationszeit t₉₀ zeigen. Aus den Vergleichsversuchen V2, V3 und V4 geht hervor, dass die Verringerung der DPG-Menge alleine (ohne einen Zusatz von Polyetheraminen) längere Ausvulkanisationszeiten, geringere Shore A Härten bei Raumtemperatur, geringere Rückprallelastizitäten bei 70 °C und verringerte Steifigkeiten (niedrigere Werte für Modul 300 %) verursacht.

## Patentansprüche

1. Kautschukmischung enthaltend
- wenigstens einen Dienkautschuk und
- 0,1 bis 20 phr wenigstens eines Polyetheramins und
- 5 bis 250 phr wenigstens einer Kieselsäure,
wobei das Polyetheramin aus Propylenoxid hergestellt ist und/oder von Propylenoxid abgeleitet ist.

2. Kautschukmischung nach Anspruch 1, **dadurch gekennzeichnet, dass** das Polyetheramin die folgende Summenformel aufweist:
R₁R₂N(CH(CH₃)CH₂O)ₓCH₂CH(CH₃)NR₁R₂, wobei R₁ ein Wasserstoffatom und R₂ ein Wasserstoffatom oder ein verzweigter und/oder unverzweigter Kohlenwasserstoffrest mit 1 bis 10 Kohlenstoffatomen und x größer oder gleich 1 und kleiner oder gleich 7 ist.

3. Kautschukmischung nach Anspruch 2, **dadurch gekennzeichnet, dass** R₂ des Polyetheramins ein Wasserstoffatom ist.

4. Kautschukmischung nach Anspruch 2, **dadurch gekennzeichnet, dass** R₂ des Polyetheramins ein verzweigter und/oder unverzweigter Kohlenwasserstoffrest mit 2 bis 5 Kohlenstoffatomen ist.

5. Kautschukmischung nach einem der Ansprüche 1 bis 4, **dadurch gekennzeichnet, dass** sie frei von Diphenylguanidin ist.

6. Fahrzeugluftreifen, **dadurch gekennzeichnet, dass** er in wenigstens einem Bauteil wenigstens eine Kautschukmischung nach einem der Ansprüche 1 bis 5 enthält.

7. Fahrzeugluftreifen nach Anspruch 6, **dadurch gekennzeichnet, dass** es sich bei dem Bauteil um einen Laufstreifen handelt.

8. Verwendung einer Kautschukmischung nach einem der Ansprüche 1 bis 5 in technischen Kautschukartikeln.

9. Verwendung einer Kautschukmischung nach einem der Ansprüche 1 bis 5 in einem Fahrzeugluftreifen zur Verbesserung der Abriebeigenschaften, der Prozessierbarkeit und der Rollwiderstand-/Nassgriffeigenschaften.

## Claims

1. Rubber mixture comprising
- at least one diene rubber and
- from 0.1 to 20 phr of at least one polyetheramine and
- from 5 to 250 phr of at least one silica, where the polyetheramine has been produced from propylene oxide and/or derives from propylene oxide.

2. Rubber mixture according to Claim 1, **characterized in that** the molecular formula of the polyetheramine is as follows:
R₁R₂N(CH(CH₃)CH₂O)ₓCH₂CH(CH₃)NR₁R₂, where R₁ is a hydrogen atom and R₂ is a hydrogen atom or a branched and/or unbranched hydrocarbon moiety having from 1 to 10 carbon atoms and x is greater than or equal to 1 and smaller than or equal to 7.

3. Rubber mixture according to Claim 2, **characterized in that** R₂ of the polyetheramine is a hydrogen atom.

4. Rubber mixture according to Claim 2, **characterized in that** R₂ of the polyetheramine is a branched and/or unbranched hydrocarbon moiety having from 2 to 5 carbon atoms.

5. Rubber mixture according to any of Claims 1 to 4, **characterized in that** it is free from diphenylguanidine.

6. Pneumatic tyre, **characterized in that** it comprises in at least one component at least one rubber mixture according to any of Claims 1 to 5.

7. Pneumatic tyre according to Claim 6, **characterized in that** the component is a tread.

8. Use of a rubber mixture according to any of Claims 1 to 5 in technical rubber items.

9. Use of a rubber mixture according to any of Claims 1 to 5 in a pneumatic tyre for improving abrasion properties, processability and rolling-resistance/wet-grip properties.

## Revendications

1. Mélange pour caoutchouc contenant
- au moins un caoutchouc diène, et
- 0,1 à 20 parties par cent parties d'au moins une polyétheramine
- 5 à 250 parties par cent parties d'au moins une silice,
la polyétheramine étant préparée à partir d'oxyde de propylène et/ou étant dérivée d'oxyde de propylène.

2. Mélange pour caoutchouc selon la revendication 1, **caractérisé en ce que** la polyétheramine présente la formule brute suivante :
R₁R₂N(CH(CH₃)CH₂)ₓCH₂CH(CH₃)NR₁R₂, R₁ représentant un atome d'hydrogène et R₂ représentant un atome d'hydrogène ou un radical hydrocarboné ramifié et/ou non ramifié comprenant 1 à 10 atomes de carbone et x étant supérieur ou égal à 1 et inférieur ou égal à 7.

3. Mélange pour caoutchouc selon la revendication 2, **caractérisé en ce que** R₂ de la polyétheramine est un atome d'hydrogène.

4. Mélange pour caoutchouc selon la revendication 2, **caractérisé en ce que** R₂ de la polyétheramine est un radical hydrocarboné ramifié et/ou non ramifié comprenant 2 à 5 atomes de carbone.

5. Mélange pour caoutchouc selon l'une quelconque des revendications 1 à 4, **caractérisé en ce qu'**il est exempt de diphénylguanidine.

6. Pneumatique pour véhicule, **caractérisé en ce qu'**il contient, dans au moins un élément, au moins un mélange pour caoutchouc selon l'une quelconque des revendications 1 à 5.

7. Pneumatique pour véhicule selon la revendication 6, **caractérisé en ce qu'**il s'agit, pour l'élément, d'une bande de roulement.

8. Utilisation d'un mélange pour caoutchouc selon l'une quelconque des revendications 1 à 5 dans des objets techniques en caoutchouc.

9. Utilisation d'un mélange pour caoutchouc selon l'une quelconque des revendications 1 à 5 dans un pneumatique pour véhicule pour améliorer les propriétés d'usure, l'aptitude à la transformation et les propriétés de résistance au roulement/sur chaussée humide.
